# EUROPÄISCHE PATENTSCHRIFT

(11) **EP 2 655 128 B1**
(45) Veröffentlichungstag und Bekanntmachung des Hinweises auf die Patenterteilung: **13.06.2018**
(21) Anmeldenummer: 11802642.6
(22) Anmeldetag: 14.12.2011
(51) Int. Cl.: B60N 2/68, B23K 26/24, B23K 26/00, C21D 1/09, B60N 2/427, C21D 9/00, C21D 9/08, B23K 26/32, B23K 103/04, B23K 103/00

(54) **FAHRZEUGSITZSTRUKTUR MIT LASERVERFESTIGTEN BEREICHEN**
VEHICLE SEAT STRUCTURE HAVING LASER-STRENGTHENED AREAS
STRUCTURE DE SIÈGE DE VÉHICULE COMPRENANT DES ZONES CONSOLIDÉES AU LASER

(30) Priorität: 21.12.2010 DE 102010055580; 17.05.2011 DE 102011101700
(43) Veröffentlichungstag der Anmeldung: 30.10.2013
(73) Patentinhaber: Sitech Sitztechnik GmbH, 38442 Wolfsburg (DE)
(72) Erfinder: BARKOW, Tomas, 38102 Braunschweig (DE)
(74) Vertreter: Wöhltjen, Karsten
(86) Internationale Anmeldenummer: PCT/EP2011/006289
(87) Internationale Veröffentlichungsnummer: WO 2012/084144

(56) Entgegenhaltungen:
- EP-A2- 0 372 337
- WO-A1-99/47379
- WO-A1-02/083451
- DE-A1-102006 031 273
- DE-A1-102007 024 797
- DE-U1-202007 012 569

## Beschreibung

Die Erfindung betrifft eine Fahrzeugsitzstruktur mit laserstrahlverfestigten Bereichen.

Die Druckschrift DE 20 2007 012 569 U1 offenbart, dass Bauteile einer Verstelleinrichtung zur Neigungsverstellung eines Fahrzeugsitzes miteinander durch Laserschweißen über eine Laser-Schweißverbindung miteinander verbunden werden können.

Aus der DE 10 2007 024 797 A1 ist ein Verfahren zur Herstellung eines Profilbauteils aus einem Blechhalbzeug bekannt, das zumindest abschnittsweise eine strukturell erhöhte Festigkeit aufweist. Das Blechhalbzeug wird in einem mindestens einstufigen Biegeprozess umgeformt. Der Biegeprozess wird mit nachfolgenden Trenn- und Schneidoperationen des Blechhalbzeugs mit einer thermischen Behandlung mindestens eines räumlich begrenzten Bereichs des Blechhalbzeugs kombiniert. Die thermische Behandlung umfasst mindestens einen Aufheizschritt und einen sich daran anschließenden Abkühlschritt. Der mindestens eine räumlich begrenzte Bereich weist nach der Abkühlung eine strukturell erhöhte Festigkeit auf. Durch das Verfahren können Profilbauteile mit einem offenen, mit einem teilweise offenen oder auch mit einem vollständig geschlossenen Profilquerschnitt und mit gezielt angepassten Härteeigenschaften hergestellt werden. Es ist möglich, ein Profilbauteil herzustellen, das abschnittsweise gehärtete und abschnittsweise nicht gehärtete Bereiche aufweist. Die gehärteten Bereiche können teilgehärtet, vollständig gehärtet oder auch abschnittsweise teilgehärtet und abschnittsweise vollständig gehärtet sein. Beispielsweise erfolgt das Umformen des Profilbauteiles in der DE 10 2007 024 797 A1 durch Walzprofilieren und das Erwärmen lokal definierter Bereiche zum Verfestigen dieser Bereiche vor, während oder nach dem Umformen.

Die lokale räumliche Erwärmung des Blechhalbzeugs kann vorteilhaft durch induktive Erzeugung eines elektromagnetischen Feldes oder durch einen konduktiven Stromdurchfluss mittels des elektrischen Widerstandes (oder durch eine Kombination dieser beiden Verfahren) - also durch Dissipation elektrischer Energie - erreicht werden. Es besteht in weiteren Ausführungsformen auch die Möglichkeit, dass die Wärme durch eine oder mehrere Laserlichtquellen, durch eine Infrarotstrahlungsquelle oder mittels eines Gasbrenners in definierte Bereiche des Blechhalbzeugs eingebracht wird. Laserlichtquellen haben den Vorteil, dass das von ihnen erzeugte Laserlicht zum Beispiel mit einfachen Mitteln auch auf einen vergleichsweise kleinen räumlich begrenzten Bereich des Blechhalbzeugs fokussiert werden kann, um in diesem Bereich eine lokale Erwärmung auf die gewünschte Temperatur zu bewirken.

Bei dem so genannten Laserstrahlverfestigen, bei dem zumindest abschnittsweise gehärtete Bereiche in dem Profilbauteil erzeugt werden können, wird ein kohlenstoffhaltiger Stahl für kurze Zeit über die Austenitisierungstemperatur erwärmt und durch rasche Abkühlung in die härtere martensitische Gefügeform umgewandelt. Dabei wird die Wärme über die Absorption der Laserstrahlung an der Oberfläche erzeugt. Die Abschreckung erfolgt durch Wärmeleitung in das Materialinnere. Die Einhärtetiefe beim Laserstrahlverfestigen ist durch Wärmetransport und Selbstabschreckung beschränkt. Den zeitlichen Temperaturverlauf bestimmen im Wesentlichen die Spotgeometrie des Laserstrahls an der Bearbeitungsstelle und die Vorschubgeschwindigkeit des Laserstrahls gegenüber dem Material. Beim Schweißen und Laserstrahlverfestigen oft angewandte Laserquellen sind vor allem der CO₂- und der Nd:YAG-Laser, wobei sich derzeit auch die sich schnell weiterentwickelnden Faserlaser in verschiedenen technischen Bereichen verstärkt durchsetzen.

Die Druckschrift EP 1 377 480 B1 schlägt bereits einen Beschlag für einen Kraftfahrzeugsitz mit einem ersten Beschlagteil und einem relativ zum ersten Beschreibungsteil beweglichen zweiten Beschlagteil vor, welches dem ersten Beschlagteil zugeordnet ist und bezüglich des ersten Beschlagteiles gelagert, geführt und/oder abgestützt ist. Das erste und/oder das zweite Beschlagteil sind gemäß der zugehörigen Offenbarung dieser Druckschrift wenigstens teilweise gehärtet. Im Wesentlichen ist vorgesehen, ganze Bereiche der Beschlagteile mittels eines Lasers gezielt in einer Randschicht zu härten. Die Randschichthärtung, als eine Art der Oberflächenhärtung, ist eine Methode, um bei metallischen Bauteilen die äußersten Schichten zu härten. Der Begriff Randschichthärtung umfasst nach DIN 10 052 jedoch nur die Verfahren, bei denen die Randschicht verfestigt, bei denen das Randgefüge eines Bauteiles zumeist von einer bereits harten in eine noch härtere Gefügeform umgewandelt wird.

Der Erfindung liegt ausgehend von dem beschriebenen Stand der Technik die Aufgabe zugrunde, eine Sitzstruktur für einen Fahrzeugsitz zu schaffen, welche zumindest in den für das Crashversagen wichtigen Bereichen eine erhöhte Festigkeit aufweist und welche ein geringeres Gewicht gegenüber herkömmlichen Sitzstrukturen gleicher Bauart aufweist, um das Gesamtgewicht eines Fahrzeuges reduzieren zu können, wodurch ein Beitrag zur Reduzierung der CO₂-Emission eines Fahrzeuges geleistet werden kann.

Ausgangspunkt der Erfindung ist eine Verfahren zur gezielten Beeinflussung des Verformungsverhaltens einer Sitzstruktur eines Fahrzeugsitzes, bei dem das Material einer Rückenlehnenstruktur und einer Sitzteilstruktur, die mittels eines Beschlagteile aufweisenden Lehnenverstellers zu einer Fahrzeugsitzstruktur neigungsverstellbar verbunden sind, wie folgt verändert wird,
Die Erfindung ist durch die technischen Merkmale des unabhängigen Verfahrensanspruchs 1 bzw. des unabhängigen Vorrichtungsanspruchs 3 definiert; die davon abhängigen Ansprüche geben bevorzugte Weiterbildungen der Erfindung an. Erfindungsgemäß ist vorgesehen, dass das Material, an Stellen in denen keine Bauteile miteinander verbunden werden, in mindestens einem flächigen Bereich der Fahrzeugsitzstruktur und/oder des Lehnenverstellers mittels einer Laserlichtquelle linienförmig unter Ausbildung eines mindestens eine Linie umfassenden Linienmusters erwärmt wird, und a) in einem Teil der vorhandenen Materialstärke des Materials teilweise umgeschmolzen oder b) über die gesamte Materialstärke des Materials vollständig umgeschmolzen wird, und durch Selbstabschreckung abgekühlt und in eine härtere Gefügeform umgewandelt wird, wobei mittels der Laserlichtquelle zumindest eine Verfestigungsstruktur erzeugt wird, die im Material der jeweiligen Struktur und/oder des Lehnenverstellers in dem von dem Linienmuster durchzogenen flächigen Bereich eine linienförmige Fließbehinderung darstellt, in dem eine höhere Energie aufgenommen wird, wodurch die Fahrzeugsitzstruktur in dem mindestens einen durch die Verfestigungsstruktur laserverfestigten Bereich strukturell eine erhöhte Festigkeit aufweist.

Es ist bevorzugt vorgesehen, dass die zumindest abschnittsweise Ausbildung mindestens einer Verfestigungsstruktur, die mindestens eine Linie und/oder mindestens ein Linienmuster umfasst, in dem mindestens einen laserverfestigten Bereich mit demjenigen Laserstrahlgerät innerhalb einer Anlage durchgeführt wird, welches auch zum Verbinden von zusammengefügten Strukturen der Sitzstruktur mittels Laserschweißen verwendet wird.

Durch die Anwendung des Verfahrens wird ein Fahrzeugsitz mit einer Sitzstruktur und einem Lehnenversteller geschaffen, der mindestens einen materialseitig laserstrahlverfestigten Bereich, in dem mindestens eine, mittels einer Laserlichtquelle erzeugtes mindestens eine Linie umfassendes Linienmuster aufweisende Verfestigungsstruktur angeordnet ist, die nach dem erfindungsgemäßen Verfahren erzeugt ist, wobei die mindestens eine Linie eine linienförmige Fließbehinderung im Material darstellt, so dass in der mindestens einen Verfestigungsstruktur eine höhere Energie aufgenommen wird, wodurch die Fahrzeugsitzstruktur in dem mindestens einen durch die Verfestigungsstruktur laserverfestigten Bereich strukturell eine erhöhte Festigkeit aufweist.

Die Erfindung schlägt somit als Grundidee vor, in speziell ausgewählten Bereichen eines Fahrzeugsitzes ein Laserstrahlverfestigen durchzuführen, wobei speziell ausgebildete Verfestigungsstrukturen ausgebildet werden, die sich durch mittels eines Laserstrahlgerätes herstellbare einzelne Linien und/oder Linienmuster auszeichnen.

Solche Linien und/oder Linienmuster sind mit einem Laserstrahlgerät leicht herstellbar. Beim Laserstrahlverfestigen können materialabhängig bei einer vorgebbaren Strahlleistung [in kW] der Laserquelle in Abhängigkeit von der Einschweißtiefe [in mm] und der Schweißgeschwindigkeit [in m/min] so genannte Einschweißkurven ermittelt und in das Material eingebracht werden.

Insbesondere der Einsatz von Faserlasern ermöglicht die Erzeugung eines Laserstrahls mit einem geringen Spotdurchmesser, so dass sehr dünne Linien beziehungsweise mehrere Linien umfassende Linienmuster erzeugbar sind. Mit einem Faserlaser, der beispielsweise mit einer Leistung von 1 kW im Einsatz ist, können beispielsweise Linien mit einer Breite von nur 30 µm erzeugt werden. Die innere Geometrie der linienartigen Einschweißungen, das heißt der im Material erzeugten Laserschweißspuren, ist von den verwendeten Schweißparametern [Strahlleistung; Schweißgeschwindigkeit; Spotdurchmesser] abhängig. Bei sonst gleich bleibenden Prozessparametern lässt sich die Einschweißtiefe sehr gut durch die Variation der Schweißgeschwindigkeit variieren. In vorteilhafter Weise kann das Laserstrahlgerät dann mit einer konstanten Strahlleistung betrieben werden.

Die Ermittlung der Einschweißkurven erfolgt unter Berücksichtigung der verschiedenen Laserquellen. Einschweißkurven, die mittels verschiedener Laserquellen erzeugt werden, sind untereinander vergleichbar, so dass eine gezielte Auswahl der Laserquelle für den jeweiligen Anwendungsfall möglich ist.

Da der Fachmann von Einschweißkurven spricht, wird das Laserstrahlverfestigen auch als Laserstrahleinschweißen bezeichnet, welches in der hier vorgeschlagenen Anwendung nicht dazu dient, Bauteile durch Schweißen miteinander zu verbinden, sondern es wird erfindungsgemäß durch das Einbringen von Linien und/oder Linienmuster aufweisenden Verfestigungsstrukturen mittels eines Laserstrahls ein Umschmelzen des Materials in mindestens einem dafür vorgesehenen Bereich der Sitzstruktur und/oder des Lehneneinstellers bewirkt. Das Umschmelzen führt dazu, dass in dem mindestens einen Bereich eine erhöhte Festigkeit des Materials erreicht wird. An der Sitzstruktur und/oder dem Lehneneinsteller werden die eine Linie und/oder ein Linienmuster aufweisenden Verfestigungsstrukturen auf der Oberfläche des jeweiligen Bauteils anhand der Laserschweißspuren sichtbar.

In einer Ausgestaltung der Erfindung wird das Laserstrahleinschweißen mit Einzellinien und in einer anderen Ausgestaltung mit Linienmustern vorgeschlagen. Durch die Ausbildung von Linien und/oder Linienmustern entstehen von Linien durchzogene Zonen beziehungsweise Materialbereiche, die gegenüber den aus dem Stand der Technik bekannten Sitzstrukturen eine höhere Stabilität aufweisen, wobei die durch das Material gezogenen Linien im Material eine Fließbehinderung darstellen. Für eine etwaigen Crashfall kann das Verformungsverhalten der Sitzstruktur und/oder eines Lehneneinstellers derart beeinflusst werden, dass die Strukturfestigkeit in den verfestigten Zonen beziehungsweise verfestigten Bereichen höher ist, als in den nicht derart modifizierten Bereichen, wodurch in diesen Bereichen eine höhere Energie aufgenommen werden kann.

In der Wärmeeinflusszone der durch die Laserlichtquelle in Einzellinien oder Linienmustern erzeugten Laserschweißspuren wurde bei höher kohlenstoffhaltigen Stählen Martensitbildung ähnlich dem klassischen Härten ermittelt. Das Nahtgefüge der niedrig gekohlten Stähle bleibt ferritisch, die Festigkeitssteigerung erfolgt durch den "Abschreckalterungsvorgang," bei dem der Kohlenstoff infolge rascher Abkühlung teilweise im α-Gitter in übersättigter Lösung verbleibt und eine Erhöhung des Formänderungswiderstandes bewirkt.

Die Vorteile der Anwendung des Verfahrens bestehen zusammengefasst darin, dass das Laserstrahlhärten (Laserstrahleinschweißen) zu einer lokalen Steigerung der Festigkeit, besonders der Dehngrenze in den gehärteten Materialbereichen der Sitzstruktur führt. Je nach Werkstoff tritt eine Steigerung der Dehngrenze zwischen 4 % und 12 % ein. Die gesteigerte lokale Festigkeit in der Sitzstruktur und/oder dem Lehneneinsteller führt im Crashfall zu einer erhöhten Energieaufnahme von ca. 10 %. Das Prinzip des Laserstrahlhärtens ist an Profilbauteilen der Fahrzeugsitzstruktur möglich und einfach realisierbar, wozu die Anmelderin die Sitzstruktur, insbesondere die Rückenlehnenstruktur und Sitzteilstruktur, als auch die Beschlagteile eines Lehneneinstellers und die Adapterplatten eines Lehneneinstellers zählt, die an einer Sitzstruktur zwischen Rückenlehnenstruktur und Sitzteilstruktur verbaut werden. Von besonderem Vorteil ist ferner, dass durch Laserstrahleinschweißen auch Stahlteile mit geringerem Kohlenstoffgehalt gehärtet werden können.

Durch die Anwendung des Verfahrens wird eine Fahrzeugsitzstruktur geschaffen, die mindestens einen laserstrahlverfestigten Materialbereich aufweist. Wenn nachfolgend von Linienmustern die Rede ist, sollen auch die Anwendungsfälle umfasst sein, bei denen nur eine Linie, das heißt nur eine Laserschweißspur, ausgebildet wird. Das Linienmuster umfasst in einem solchen Fall nur eine einzige Linie. Mindestens zwei linienartige Laserschweißspuren bilden ein Linienmuster unabhängig davon, ob sich die Laserschweißspuren schneiden oder nicht.

Die erfindungsgemäße Sitzstruktur eines Fahrzeugsitzes umfasst üblicherweise die Rückenlehnenstruktur und die Sitzteilstruktur, die über mindestens einen Beschlagteile aufweisenden Lehnenversteller neigungsverstellbar miteinander verbunden sind. Die Sitzstruktur und/oder der Lehnenversteller zeichnen sich erfindungsgemäß durch mindestens einen zumindest abschnittsweise laserstrahlverfestigten Materialbereich aus, der Linien und/oder Linienmuster aufweisende Verfestigungsstrukturen umfasst.

In bevorzugter Ausgestaltung der Erfindung wird eine Sitzstruktur geschaffen, die eine Seitenteilstruktur der Rückenlehnenstruktur in einem ersten Bereich des Fahrzeugsitzes umfasst, die mindestens eine mittels einer Laserlichtquelle erzeugte, mindestens ein Linienmuster und/oder mindestens eine Linie aufweisende Verfestigungsstruktur umfasst.

In weiterer bevorzugter Ausgestaltung der Erfindung wird eine Sitzstruktur geschaffen, die eine Rückwandstruktur der Rückenlehnenstruktur in einem zweiten Bereich des Fahrzeugsitzes umfasst, insbesondere im Bereich des mindestens einen Lehnenverstellers angeordnet ist, die mindestens eine mittels einer Laserlichtquelle erzeugte, mindestens ein Linienmuster und/oder mindestens eine Linie aufweisende Verfestigungsstruktur aufweist.

Ferner ist eine weitere bevorzugte Ausgestaltung vorgesehen. In einem dritten Bereich der Fahrzeugsitzstruktur ist vorgesehen, dass in mindestens einem Beschlagteil des mindestens einen Lehnenverstellers mindestens eine mittels einer Laserlichtquelle erzeugte, mindestens ein Linienmuster oder mindestens eine Linie aufweisende Verfestigungsstruktur angeordnet ist.

Weiterhin wird eine Ausgestaltung vorgeschlagen, die sich dadurch auszeichnet, dass in mindestens einer in mindestens einem vierten und/oder fünften Bereich mit einem der Beschlagteile verbundenen Adapterplatte des mindestens einen Lehnenverstellers des Fahrzeugsitzes mindestens eine mittels einer Laserlichtquelle erzeugte, mindestens ein Linienmuster und/oder mindestens eine Linie aufweisende Verfestigungsstruktur ausgebildet ist. Schließlich ist bevorzugt vorgesehen, dass eine Seitenteilstruktur der Sitzteilstruktur in einem sechsten Bereich des Fahrzeugsitzes mindestens eine mittels einer Laserlichtquelle erzeugte, mindestens ein Linienmuster und/oder mindestens eine Linie aufweisende Verfestigungsstruktur umfasst.

Der Vorteil der durch das Verfahren geschaffenen Sitzstrukturen besteht insbesondere darin, dass die linienförmig gebildeten Verfestigungsstrukturen auch linienförmig ausgebildete Metallgefügeveränderungen ermöglichen, wobei ein schneller und hoher Energie-/ Wärmeeintrag ermöglicht wird, ohne die Gestalt des Bauteiles durch den Wärmeeintrag negativ zu beeinflussen.

Es kommt zu linienförmigen Fließbehinderungen in der jeweiligen Metallstruktur der Sitzstruktur und/oder des Lehneneinstellers, die in einem Crashfall das Deformationsverhalten dahingehend positiv beeinflussen, dass ein Bauteilversagen später eintritt.

Im Unterschied zu dem wohl am nächsten kommenden Stand der Technik, der Druckschrift EP 1 377 480 B1, werden keine Flächen randzonengehärtet, sondern es werden Verfestigungsstrukturen eingesetzt, die in den genannten Bereichen der Fahrzeugsitzstruktur Linienmuster ausbilden.

Es hat sich herausgestellt, dass durch die Linienmuster, auch dann, wenn das Linienmuster beispielsweise nur eine Linie ist, sprich nur eine Laserschweißspur aufweist, eine wirksame Fließbehinderung im Material bewirkbar ist.

Die Ausbildung von linienartigen Verfestigungsstrukturen in vorgebbaren Linienmustern hat zudem den Vorteil, und unterscheidet sich dadurch ebenfalls von der Druckschrift WO 02/083451 A1 (EP 1 377 480 B1), dass ein Umschmelzen nicht in einem flächigen Bereich des Bauteiles im Randbereich des Materials vorgenommen wird.

Erfindungsgemäß wird - anders als im Stand der Technik - wie folgt vorgegangen. Die Strahlleistung der Laserquelle wird in Abhängigkeit von der gewünschten Einschweißtiefe [in mm] und der Schweißgeschwindigkeit [in m/min] gewählt und zwar so, dass der Laserstrahl während des Laserstrahleinschweißens das Material im Sinne dieser Erfindung in einer ersten Ausführungsvariante (a) linienförmig unter Ausbildung von Linienmustern in einem Teil der vorhandenen Materialstärke (- teilweises Umschmelzen -) oder in einer zweiten Ausführungsvariante (b) linienförmig ebenfalls unter Ausbildung von Linienmustern über die gesamte Materialstärke (- vollständiges Umschmelzen -) jeweils durch Umschmelzen verändert.

Anders gesagt, beim Laserstrahleinschweißen werden die Linienmuster entweder eingeschweißt, das heißt, das Material wird angeschmolzen und in der angeschmolzenen Materialstärke teilweise umgeschmolzen oder durchgeschweißt, das heißt, das Material wird durchgeschmolzen und in der gesamten durchgeschmolzen Materialstärke vollständig umgeschmolzen.

Dementsprechend erfolgt linienförmig stets ein Umschmelzen über die gesamte Materialstärke oder nur über einen Teil davon. Ein Umschmelzen über die gesamte Materialstärke wird dadurch verdeutlicht, dass die Laserschweißspuren auf beiden Seiten des verfestigten Bauteiles sichtbar werden. Analog dazu ist bei einem Umschmelzen über einen Teil der Materialstärke die Laserschweißspur nur auf der Seite des Bauteiles sichtbar, auf der das Laserstrahleinschweißen vorgenommen wurde.

Sowohl bei der Vorgehensweise gemäß der ersten Ausführungsvariante (a) als auch bei der Vorgehensweise gemäß der zweiten Ausführungsvariante (b) wird eine linienartige Fließbehinderung, bei mehreren Linien werden mehrere Fließbehinderungen nebeneinander oder durch sich schneidende Linien mehrere miteinander verbundene Fließbehinderungen gebildet, die in ihrer Wirkung jeweils einzeln oder gemeinsam einen verfestigten Materialbereich bilden. Durch solche linienartigen Fließbehinderungen wird das Verformungsverhalten zugunsten einer steigenden Strukturfestigkeit des jeweiligen Bauteiles positiv beeinflusst.

Über die Strahlleistung der Laserquelle in Abhängigkeit der Schweißgeschwindigkeit [in m/min] kann in vorteilhafter Weise die Einschweißtiefe gewählt werden, so dass das Verformungsverhalten eines Bauteiles im Crash gezielt eingestellt werden kann. Damit wurde in überraschender Weise über die bekannten Methoden hinaus eine Möglichkeit gefunden, das Crashverhalten von Bauteilen einer Fahrzeugsitzstruktur positiv beeinflussen zu können.

Wie bereits erwähnt, besteht ein Vorteil auch darin, dass das Laserschweißen zum Verbinden von Bauteilen und das Laserstrahleinschweißen automatisiert in einer Anlage durchgeführt werden kann. Prinzipiell besteht die Möglichkeit, die Strahlleistung der Laserquelle oder die Schweißgeschwindigkeit zu verändern, je nachdem, ob Bauteile durch Schweißen verbunden werden sollen oder ob eine linienartige Verfestigungsstruktur durch Laserstrahleinschweißen ausgebildet werden soll, bei dem Laserschweißspuren an Stellen in das Material eingebracht werden, an denen keine Bauteile miteinander verbunden werden sollen. In bevorzugter Ausgestaltung der Erfindung wird die Strahlleistung der Laserquelle konstant gehalten und die Einschweißtiefe zur Verbindung zweier Bauteile untereinander oder zur Erzeugung von Laserschweißspuren zur Verfestigung des Materials durch die Veränderung der Schweißgeschwindigkeit beeinflusst. Zur Erzeugung von Laserschweißspuren, die nur zur Verfestigung des Materials dienen sollen, wird die Schweißgeschwindigkeit gegenüber dem Bauteile verbindenden Schweißen entsprechend angehoben.

Vorteilhaft ist zudem, dass durch das Verfahren, bei dem linienartige Verfestigungsstrukturen in der Struktur des Fahrzeugsitzes hergestellt werden, nur ein geringer Schweißverzug auftritt. Die Maßhaltigkeit der Sitzstruktur und/oder des Lehneneinstellers des Fahrzeugsitzes ist gegeben und der negative Einfluss auf die Maßhaltigkeit fällt bei einem linienartigen Laserstrahleinschweißen geringer aus als bei einem flächigen Randzonenhärten nach dem Stand der Technik. Zudem können die Linien eines durch Laserstrahleinschweißen gebildeten Linienmusters durch eine automatisierte Laserschweißanlage in zeitlichen Abständen eingebracht werden, wodurch die Beeinflussung des Materials so gering ist, dass ein Schweißverzug nahezu vollständig vermieden wird, woher die hohe Maßhaltigkeit der durch das Verfahren veränderten materialseitigen - modifizierten - Strukturen des Fahrzeugsitzes rührt.

Die Erfindung wird anhand der nachfolgenden Figuren detailliert erläutert. Es zeigen:
- Figur 1A: eine Sitzstruktur mit einem Lehnenversteller mit Verfestigungsstruktu ren;
- Figur 1B, 1C, 1D, 1E, 1: F eine Seitenteilstruktur der Rückenlehne, insbesondere ein Rückenlehnenseitenholm mit Verfestigungsstrukturen;
- Figur 1G, 1H, 1I, 1J: eine Seitenteilstruktur des Sitzteiles mit Verfestigungsstrukturen;
- Figur 2A: ein Beschlagteil mit einer am Beschlagteil angeordneten Adapterplatte mit Verfestigungsstrukturen;
- Figuren 2B, 2C, 2D, 2E: das Beschlagteil mit Verfestigungsstrukturen und
- Figur 3: ein anderes Beschlagteil mit Verfestigungsstrukturen.

Mögliche Ausgestaltungen der Erfindung werden nachfolgend erläutert. Für die Zwecke der Beschreibung soll die in Längsrichtung des Fahrzeuges liegende Richtung mit "x" bezeichnet werden. Mit "y" wird die Richtung in der Horizontalen des Fahrzeuges quer zur x-Richtung bezeichnet und mit "z" wird die Richtung in der Vertikalen des Fahrzeuges quer zur x-Richtung bezeichnet. Diese Bezeichnungsweise der Raumrichtungen in kartesischen Koordinaten entspricht einem in der Kraftfahrzeugindustrie allgemein verwendeten Koordinatensystem.

Innerhalb aller Figuren werden nachfolgend die gleichen Bezugszeichen für gleiche Bauteile verwendet, wobei gegebenenfalls nicht in jeder Figur erneut alle bereits vorgestellten Bauteile anhand der Bezugszeichen nochmals erläutert werden.

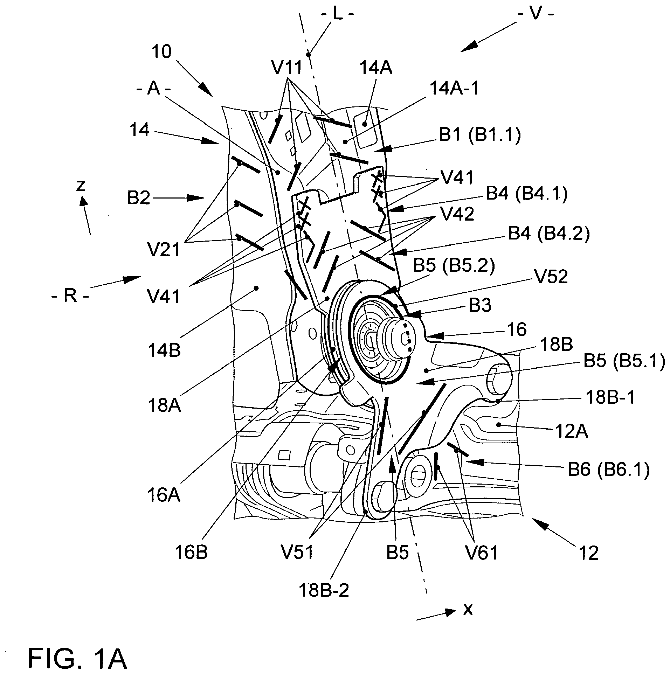

Die Fahrzeugsitzstruktur 10 eines Fahrzeugsitzes ist in Figur 1A in einer perspektivischen Ansicht schräg von hinten dargestellt. Sie umfasst eine Sitzteilstruktur 12 und eine Rückenlehnenstruktur 14, die über einen Lehnenversteller 16 neigungsverstellbar miteinander verbunden sind. Auf der nicht sichtbaren gegenüber liegenden Seite des Lehnenverstellers 16 ist die Sitzteilstruktur 12 mit der Rückenlehnenstruktur 14 in bekannter Weise ebenfalls über ein Drehgelenk oder dergleichen neigungsverstellbar verbunden.

Der Lehnenversteller 16 weist relativ zueinander verschwenkbare Beschlagteile 16A, 16B, ein erstes Beschlagteil 16A und ein zweites Beschlagteil 16B auf, wobei jedes der Beschlagteile 16A, 16B zumeist, jedoch nicht immer, mit einer so genannten Adapterplatte 18A, 18B verbunden ist. Die erste und die zweite Adapterplatte 18A, 18B dienen zur Verbindung des Lehnenverstellers 16, 16A, 16B mit der Sitzteilstruktur 12 beziehungsweise mit der Rückenlehnenstruktur 14.

In einer möglichen Ausgestaltung ist die erste Adapterplatte 18A mit der Rückenlehnenstruktur 14 und dem ersten Beschlagteil 16A verbunden, wobei die erste Adapterplatte 18A mit der Rückenlehnenstruktur 14 verschweißt ist. Die zweite Adapterplatte 18B hingegen ist mit dem zweiten Beschlagteil 18B und über Schraubverbindungen mit der Sitzteilstruktur 12 verbunden.

Es versteht sich, dass diese Art und Weise der Anbindung der Adapterplatten 18A, 18B an den Sitzstrukturen 12, 14 nur beispielhaft ist und die Art der Befestigung (Verschraubung oder Verschweißung) auch umgekehrt und auf beiden Seiten der Fahrzeugsitzstruktur 10 in gleicher Art und Weise vorgenommen werden kann.

In der seitlichen Rückenlehnenstruktur 14A ist eine Sicke 14A-1 ausgeführt, die bereits durch ihre Formgebung die Stabilität der Seitenteilstruktur 14A der Rückenlehne erhöht.

Gezeigt wird ferner eine Seitenteilstruktur 12A einer Sitzteilstruktur 12, die bereits durch ihre Formgebung die Stabilität der Seitenteilstruktur 12A des Sitzteiles erhöht. In Figur 1A ist zudem eine Rückwandstruktur 14B der Rückenlehne 14 sichtbar, die an die Seitenteilstruktur 14A der Rückenlehne 14 anschließt.

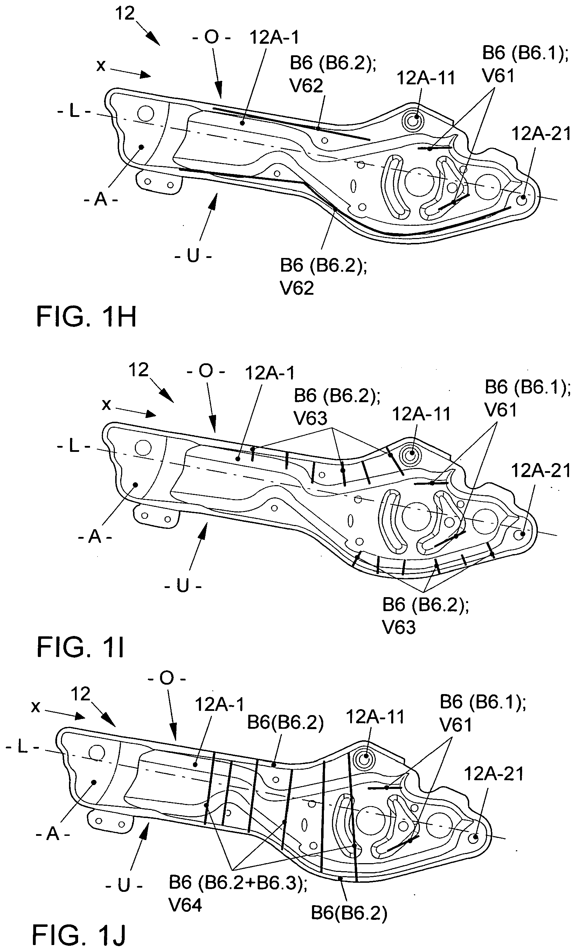

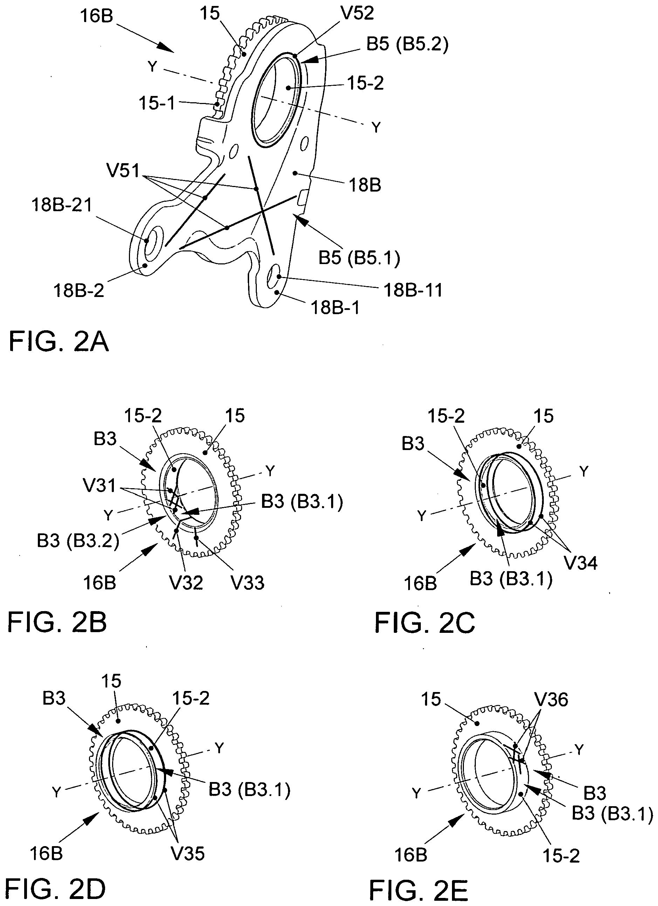

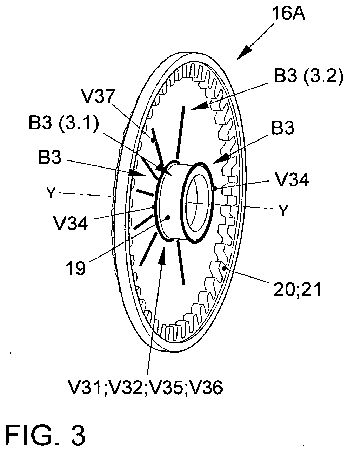

In Figur 1A sind in einer Art Übersicht prinzipiell diejenigen Bauteile dargestellt, die in einem Crashfall hinsichtlich eines möglichen Crashversagens von Bedeutung sind. Die in Figur 1A nicht darstellbaren Bereiche der Rückenlehnenstruktur 14 und der Sitzteilstruktur 12 sind die Rückenlehnenstruktur 14 betreffend in den Figuren 1A bis 1G, und die Sitzteilstruktur 12 betreffend, in den Figuren 1H bis 1J dargestellt. Detaillierte Darstellungen zu den Beschlagteilen 16A, 16B erfolgen in den Figuren 2A, 2B, 2C, 2D, 2E und 3 und zu den Adapterplatten 18A, 18B in der Figur 1A als auch in Figur 2A.

Der größte Teil der Crashkräfte wird über die Beschlagteile 16A, 16B eines Lehnenverstellers 16 aufgenommen. Über die mit den Beschlagteilen 16A, 16B in Verbindung stehenden Adapterplatten 18A, 18B werden die Crashkräfte in die Sitzteilstruktur 12 und die Rückenlehnenstruktur 14 über- beziehungsweise eingetragen.

Daraus wird deutlich, dass in den Beschlagteilen 16A, 16B des Lehnenverstellers 16 in den Adapterplatten 18A, 18B und in den genannten Sitzstrukturen 12, 14 Bereiche Bn vorhanden sind, deren ausreichende Festigkeit zum Schutz eines Fahrzeuginsassen gewährleistet werden muss. Diese Bereiche Bn unterliegen bei der Herstellung einer Sitzstruktur 10 und/oder des Lehneneinstellers der besonderen Aufmerksamkeit des Herstellers, wobei die den Bereichen Bn besonders hinsichtlich ihrer Crashfestigkeit zu beachtenden Teilbereiche Bn.m lokal bestimmbar sind.

Der Index "n" verdeutlicht den jeweiligen Bereich beziehungsweise Materialbereich mittels einer Ziffer n=1, 2, 3 ... usw., während der Index "m" ebenfalls mittels einer Ziffer m=1, 2, 3 ... usw. einen Teilbereich m des jeweiligen Bereiches n verdeutlicht. Ein Beispiel: B3.1 = erster Teilbereich des dritten Bereiches.

Bei den nachfolgenden erläuterten Verfestigungsstrukturen Vn wird mittels der ersten Ziffer des Index n verdeutlicht, in welchem Bereich n=1, 2, 3 ... usw. die jeweilige Verfestigungsstruktur V liegt. Die darauf folgende Ziffer dient der Nummerierung. Ein Beispiel: V13 = dritte Verfestigungsstruktur im ersten Bereich.

Die hinsichtlich der Festigkeit schwächsten und somit am meisten gefährdeten Bereiche Bn beziehungsweise die Teilbereiche Bn.m wurden in durchgeführten Crashversuchen genau lokalisiert und stehen im Mittelpunkt dieser Patentschrift. Erfindungsgemäß ist vorgesehen, in diesen Bereichen Bn oder in Teilbereichen Bn.m zumindest abschnittweise eine Verfestigung des Materials durch Laserstrahlhärten beziehungsweise Laserstrahlverfestigen durchzuführen, wodurch eine Fahrzeugsitzstruktur 10 mit gezielt eingestellten laserstrahlverfestigten Härtebereichen ausbildbar ist. Unter "abschnittsweise" versteht die Patentinhaberin, dass eine Verfestigung der Sitzstruktur zumindest in einem Teilbereich Bn.m, oder anderes gesagt in einem Abschnitt der nachfolgend genannten Bereiche Bn, erfolgt.

Es wird darauf verwiesen, dass es sich bei diesen Bereichen Bn beziehungsweise deren Teilbereichen Bn.m um Materialbereiche handelt, die nach bisheriger Herstellungsweise einer Sitzstruktur 10 keiner thermischen Behandlung unterlegen haben.

Die Verschweißung der ersten rückenlehnenseitigen Adapterplatte 18A mit der Seitenteilstruktur 14A der Rückenlehne 14 ist bekannt und gehört nicht zu den Bereichen, die von der Erfindung umfasst werden.

Jedoch entsteht unter Berücksichtigung der bekannten Vorgehensweise des Verschweißens von Bauteilen miteinander in vorteilhafter Weise ein Synergieeffekt, der darin besteht, dass beispielsweise zur Verbindung der ersten rückenlehnenseitigen Adapterplatte 18A mit der Seitenteilstruktur 14A der Rückenlehne 14 bereits ein Laserschweißgerät zum Verschweißen der genannten Bauteile benutzt wird.

Dieses Laserschweißgerät wird erfindungsgemäß jetzt zusätzlich dazu benutzt, das Laserstrahlverfestigen in den in den Crashversuchen ermittelten Materialbereichen Bn beziehungsweise Teilbereichen Bn.m davon durchzuführen, wie nachfolgend näher erläutert wird.

### Erster Bereich B1:

### Laserstrahlverfestigung einer Seitenteilstruktur einer Rückenlehnenstruktur

Vorgeschlagen wird, dass ein Fahrzeugsitz in einem ersten Bereich B1 mittels einer Laserlichtquelle laserverfestigt wird. Als erster Bereich B1 wird die Seitenteilstruktur 14A der Rückenlehnenstruktur 14 in Figur 1A betrachtet.

Ein erster Teilbereich B1.1, der mittels einer Laserlichtquelle laserverfestigt wird, liegt oberhalb des mindestens einen Lehnenverstellers 16 in der Seitenteilstruktur 14A der Rückenlehnenstruktur 14, die zumeist als Rückenlehnenseitenholm der Rückenlehnenstruktur 14 bezeichnet wird. Die mittels der Laserlichtquelle erzeugte erste Verfestigungsstruktur V11 im ersten Teilbereich B1.1 weist linienförmige Laserschweißspuren auf. Die linienförmigen Laserschweißspuren der ersten Verfestigungsstruktur V11 sind in Höhenrichtung der Rückenlehnenstruktur 14 schräg nach oben verlaufend angeordnet und bilden ein Linienmuster. Die Laserschweißspuren der ersten Verfestigungsstruktur V11 kreuzen dabei die beiden in Höhenrichtung verlaufenden Ränder der in der Seitenteilstruktur 14A angeordneten Sicke 14A-1. Die bereits zur Erhöhung der Stabilität der Seitenteilstruktur 14A angeordnete Sicke 14A-1 wird durch die in die Vertiefung der Sicke 14A-1 hinein laufenden Laserschweißspuren zumindest abschnittsweise verfestigt. Die Verfestigung trägt zur weiteren Erhöhung der Stabilität der Seitenteilstruktur 14A bei. Die dargestellten Laserschweißspuren der Verfestigungsstruktur V11 im ersten Teilbereich B1.1 sind auch ohne vorgesehene Sicke 14A-1 ausführbar, wodurch die Stabilität der Seitenteilstruktur 14A unabhängig von der Sicke 14A-1 erhöht werden kann.

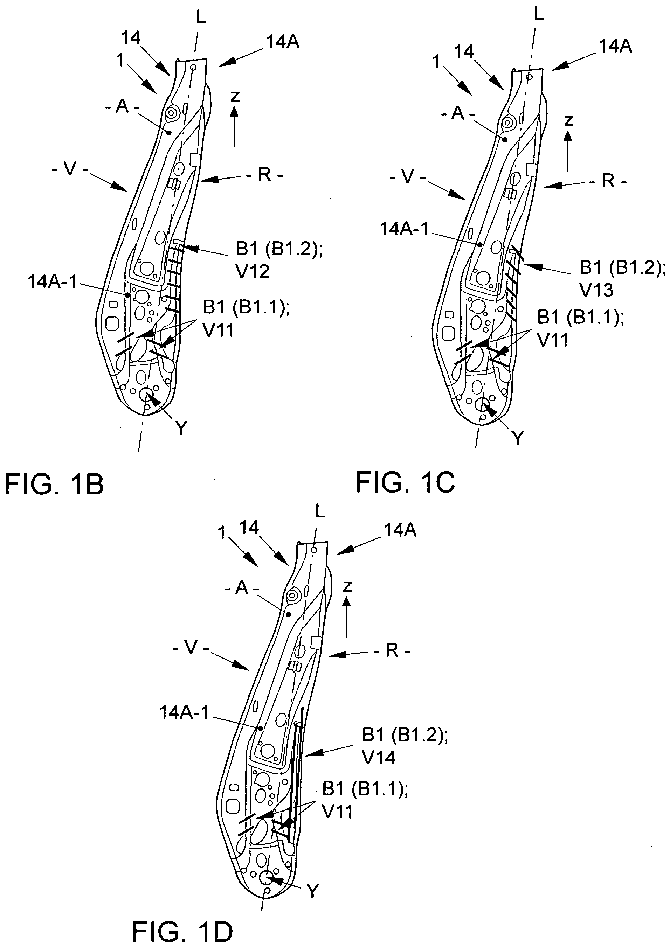

In einem zweiten Teilbereich B1.2 der Seitenteilstruktur 14A der Rückenlehnenstruktur 14, die in den Figuren 1B bis 1G dargestellt sind, werden wahlweise weitere Verfestigungsstrukturen vorgeschlagen. Die verschiedenen Linienmuster der Verfestigungsstrukturen sind in der Lage, verschieden hohe Kräfte aufzunehmen. Je nach Bedarf wird die Seitenteilstruktur 14A der Rückenlehnenstruktur 14 mit Verfestigungsstrukturen versehen, deren Linienmuster nachfolgend detailliert erläutert werden.

In den Figuren 1B bis 1G ist gemäß dem Pfeil mit dem Bezugszeichen B1.1 der erste Teilbereich B1.1 gezeigt, in dem die erste Verfestigungsstruktur V11 im Rückenlehnenseitenholm 14A gemäß Figur 1A oberhalb des mindestens einen Lehnenverstellers 16 angeordnet ist.

Die Figuren 1B bis 1G zeigen analog zu Figur 1A jeweils eine Längsachse L des Rückenlehnenseitenholmes 14A und die in die Blattebene hinein vertieft ausgeführte Sicke 14A-1 im Rückenlehnenseitenholm 14A. Die Figuren 1B bis 1G zeigen die im Zusammenbauzustand der Sitzstruktur außen liegende Fläche, mithin eine Außenseite - A - des Rückenlehnenseitenholmes 14A.

Ferner sind die im Zusammenbauzustand definierte Vorderseite - V - und Rückseite - R - definiert, wobei die Vorderseite - V - bei der üblichen Anordnung eines Fahrzeugsitzes in einem Fahrzeug vorne und die Rückseite - R - im Fahrzeug hinten liegt.

Crash-Untersuchungen haben ergeben, dass gerade die Rückseite - R - gegen Einknicken gesichert, das heißt entsprechend stabil ausgelegt werden muss. Diese Sicherheit kann durch Materialstärke oder Materialauswahl positiv beeinflusst werden. Innerhalb dieser Patentschrift wird jedoch vorgeschlagen, den Rückenlehnenseitenholm 14A in dem Bereich, in dem der höchste Krafteintrag erwartet wird, mittels Laserstrahleinschweißungen zu verfestigen.

Es werden verschiedene Verfestigungsstrukturen V12, V13, V14, V15, V16, V17 vorgeschlagen, die nachfolgend erläutert werden.

In vorteilhafter Weise besteht ein Effekt der Ausbildung von Verfestigungsstrukturen darin, dass dadurch höhere Crashkräfte aufgenommen werden können.

Die nach dem Stand der Technik vorhandenen Sitzstrukturen 12, 14 sowie der Lehneneinstellbeschlag 16, 18 sind in der Lage, die notwendigen Crashkräfte aufzunehmen. Ein besonderer Effekt der Erfindung, also der Ausbildung von Verfestigungsstrukturen mit Linienmustern in den Bauteilen einer Fahrzeugsitzstruktur 10, besteht darin, dass die Materialstärke der jeweiligen Struktur 12, 14, 16, 18 gegenüber den Materialstärken der derzeit verwendeten Fahrzeugsitzstruktur reduziert werden kann, wodurch eine Gewichtsersparnis bei gleich bleibender Sicherheit erreicht wird. Diese Vorgehensweise betrifft nicht nur den nachfolgend im Detail erläuterten Rückenlehnenseitenholm 14A, sondern auch die in dieser Patentschrift beschriebenen anderen, in einem Crash gefährdeten Bauteile, die Seitenteilstruktur 12A der Sitzteilstruktur 12, die Seitenteilstruktur 14A des Rückenlehnenstruktur 14, die Rückwandstruktur 14B der Rückenlehnenstruktur 14, das erste Beschlagteil 16A, das zweite Beschlagteil 16B, die erste Adapterplatte 18A und die zweite Adapterplatte 18B.

Ein weiterer Effekt besteht darin, dass bei einer Laserverfestigung der Materialbereiche Bn oder Teilbereiche Bn.m bei unveränderter Materialauswahl und Materialstärke ein Gewinn an Sicherheit erreichbar ist, da die jeweiligen Strukturen in der Lage sind, höhere Crashkräfte aufzunehmen.

Die nachfolgend beschriebenen Verfestigungsstrukturen V12, V13, V14 (Figuren 1B bis 1D) sind abschnittsweise in einem zweiten crashexponierten, das heißt crashgefährdeten Teilbereich B1.2 des Rückenlehnenseitenholmes 14A in etwa in der Mitte der Außenseite - A - nahe der Rückseite - R - des sich in Längsrichtung L erstreckenden Rückenlehnenseitenholmes 14A angeordnet. Der Rückenlehnenseitenholm 14A erstreckt sich mit seiner Längsrichtung L in der im Fahrzeug üblichen Einbaulage in etwa vertikal in z-Richtung.

Die Figur 1B zeigt das Linienmuster einer zweiten Verfestigungsstruktur V12 in dem zweiten Teilbereich B1.2, deren parallel verlaufende Laserschweißspuren auf der Außenseite - A - des Rückenlehnenseitenholmes 14A ausgebildet und orthogonal zur Längsrichtung L des Rückenlehnenseitenholmes 14A ausgerichtet sind.

Die Figur 1C zeigt das Linienmuster einer dritten Verfestigungsstruktur V13 in dem zweiten Teilbereich B1.2, deren parallel verlaufende auf der Außenseite - A - sichtbare Laserschweißspuren dargestellt sind, wobei die Laserschweißspuren schräg zur Längsrichtung L des Rückenlehnenseitenholmes 14A ausgerichtet sind.

Die Figur 1D zeigt das Linienmuster einer vierten Verfestigungsstruktur V14 in dem zweiten Teilbereich B1.2, deren parallel verlaufende auf der Außenseite - A - sichtbare Laserschweißspuren dargestellt sind. Die Laserschweißspuren sind in dieser Ausgestaltung in Längsrichtung L des Rückenlehnenseitenholmes 14A ausgerichtet.

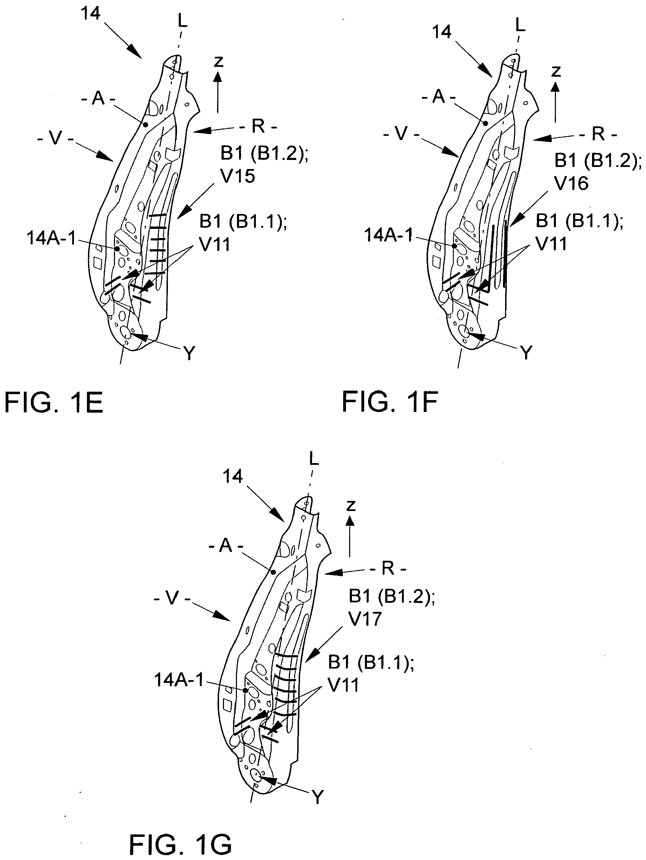

Die nachfolgenden beschriebenen Linienmuster der Verfestigungsstrukturen V15, V16 (Figuren 1E und 1F) können ebenfalls abschnittsweise in dem zweiten crashexponierten Teilbereich B1.2 des Rückenlehnenseitenholmes 14A angeordnet sein. Sie sind jedoch im Unterschied zu Figur 1B bis 1D nicht in etwa in der Mitte der Außenseite - A - nahe der Rückseite - R -, sondern in etwa in der Mitte der Rückseite - R - des sich in Längsrichtung L erstreckenden Rückenlehnenseitenholmes 14A angeordnet.

Die Figur 1E zeigt das Linienmuster einer fünften Verfestigungsstruktur V15 in dem zweiten Teilbereich B1.2, deren parallel verlaufende Laserschweißspuren auf der Rückseite - R - ausgebildet und orthogonal zur Längsrichtung L des Rückenlehnenseitenholmes 14A ausgerichtet sind.

Analog zu Figur 1D zeigt die Figur 1F, dass ein Linienmuster einer sechsten Verfestigungsstruktur V16 in dem zweiten Teilbereich B1.2 angeordnet sein kann, deren parallel verlaufende Laserschweißspuren auf der Rückseite - R - in Längsrichtung L des Rückenlehnenseitenholmes 14A ausgerichtet sind.

Die Figur 1G zeigt stellvertretend für die möglichen Kombinationen ein ebenfalls abschnittsweise in dem zweiten crashexponierten Teilbereich B1.2 des Rückenlehnenseitenholmes 14A angeordnetes Linienmuster als siebte Verfestigungsstruktur V17. Das Linienmuster dieser siebten Verfestigungsstruktur V17 vereint die Linienmuster der zweiten und fünften Verfestigungsstruktur V12, V15 zu der siebten Verfestigungsstruktur V17. Sie ist im Unterschied zu Figur 1B und 1E nicht in etwa in der Mitte der Außenseite - A - oder der Rückseite - R -, sondern in etwa in der Mitte der Außenseite und der Rückseite - R - des sich in Längsrichtung L erstreckenden Rückenlehnenseitenholmes 14A angeordnet und sozusagen um die Ecke des Rückenlehnenseitenholmes 14A herum gezogen.

Es versteht sich, dass die Verfestigungsstrukturen V12 bis V17 über den zweiten crashexponierten Teilbereich B1.2 - nach oben und/oder unten in Längsrichtung L gesehen - weiter geführt werden können.

Es hat sich jedoch bei nahezu gleichem Erfolg - hinsichtlich des Verfestigungsgrades und somit der erreichten Stabilisierung - herausgestellt, dass eine Zeitersparnis bei der Herstellung erreicht wird, wenn nur der besonders crashexponierte Teilbereich B1.2 laserverfestigt wird.

Eine Kombination der Ausbildung einer Sicke 14A-1 des Rückenlehnenseitenholmes 14A und eine Laserverfestigung mittels mindestens einer Verfestigungsstruktur V11, V12, V13, V14, V15, V16, V17 wurde hinsichtlich der Stabilisierung des Rückenlehnenseitenholmes 14A als besonders vorteilhaft, da besonders wirksam, befunden.

In einer anderen Ausgestaltung wird dafür gesorgt, dass die Linienmuster der Laserschweißspuren der Verfestigungsstrukturen V12 bis V17 im zweiten Teilbereich B1.2 nicht parallel verlaufend, sondern sich kreuzend ausgeführt sind.

### Zweiter Bereich B2:

### Laserstrahlverfestigung einer Rückwandstruktur einer Rückenlehnenstruktur

Ein zweiter Bereich B2, der mittels einer Laserlichtquelle zumindest abschnittsweise laserverfestigt wird, liegt innerhalb einer Rückwandstruktur 14B, wie Figur 1A zeigt. Das Linienmuster der mittels der Laserlichtquelle erzeugten ersten Verfestigungsstruktur V21 im zweiten Bereich B2 weist ebenfalls linienförmige Laserschweißspuren auf.

Es ist vorgesehen, das Linienmuster der Laserschweißspuren parallel zueinander in horizontaler Richtung oder - wie dargestellt - schräg nach oben in Höhenrichtung z der Rückenlehne 14 auszurichten. Durch die Anordnung der Laserschweißspuren in der gezeigten Verfestigungsstruktur V21 können in der Rückwandstruktur 14B der Rückenlehne 14 verformungsfrei höhere Kräfte als bisher eingeleitet werden.

### Dritter Bereich B3:

### Laserstrahlverfestigung eines Beschlagteiles eines Lehneneinstellbeschlages

Ein dritter Bereich B3, der mittels einer Laserlichtquelle laserverfestigt wird, betrifft die Beschlagteile 16A, 16B.

Auf die in dem dritten Bereich B3 vorgesehenen Linienmuster der Verfestigungsstrukturen V31, V32, V33, V34, V35, V36, V37 wird durch Erläuterung der Figuren 2A, 2B, 2C, 2D, 2E und Figur 3 nachfolgend näher eingegangen.

Ein beispielhaft ausgewähltes zweites Beschlagteil 16B ist in den Figuren 2B bis 2E isoliert dargestellt.

Die Figuren 2B und 2C erlauben insbesondere einen Blick auf die Innenfläche des Bundes 15-2 und auf die von der zweiten Adapterplatte 16B abgewandte Fläche des Stirnzahnkranzes 15. Zur Erhöhung der Festigkeit, insbesondere des Bundes 15-2, wird in dem dritten Bereich B3, der die Beschlagteile 16A, 16B betrifft, insbesondere auf der Innenfläche des Bundes 15-2, die einen ersten Teilbereich B3.1 darstellt, zumindest abschnittsweise eine erste Verfestigungsstruktur V31 vorgesehen. Dargestellt sind jeweils zwei gekreuzte linienförmige Linienmuster der eingebrachten Laserschweißspuren, die stellvertretend für das über den gesamten Umfang des Bundes 15-2 auf der Innenfläche ausgeführte Linienmuster der ersten Verfestigungsstruktur V31 dargestellt sind. Durch diese erste Verfestigungsstruktur V31 wird in diesem ersten Teilbereich B3.1 des dritten Bereiches B3 des zweiten Beschlagteiles 16B insgesamt eine Verfestigung des Bundes 15-2 vorgenommen, so dass ohne Verformung höhere Torsionskräfte in den Bund 15-2 eingeleitet werden können.

In Figur 2B sind zwei Linienmuster weiterer Verfestigungsstrukturen V32, V33 dargestellt. Die zweite Verfestigungsstruktur V32 im dritten Bereich B3 verläuft in dem ersten Teilbereich B3.1 des dritten Bereiches B3 auf der Innenfläche des Bundes 15-2 in axialer Richtung Y-Y des Lehnenverstellers 16 und knickt orthogonal bezogen auf die Y-Y-Achse in radialer Richtung auf die an den Bund 15-2 angrenzende Fläche, die einen zweiten Teilbereich B3.2 markiert, des Stirnzahnkranzes 15 ab.

Wenn diese zweite Verfestigungsstruktur V32 nicht nur abschnittsweise, sondern in beiden Teilbereichen B3.1 und B3.2 des dritten Bereiches B3 auf dem gesamten Umfang des Stirnzahnkranzes 15 ausgeführt wird, kommt es zu einer Verfestigung des Bundes 15-2 und des Stirnzahnkranzes 15, wobei insbesondere der Übergangsbereich zwischen dem Bund 15-2 und dem Stirnzahnkranz 15 durch die abgewinkelten, linienförmigen Laserschweißspuren auf dem gesamten Umfang verfestigt wird.

Wie die dritte Verfestigungsstruktur V33 in Figur 2B im dritten Bereich B3 zeigt, besteht auch die Möglichkeit, nur die Materialstruktur der orthogonal zur Y-Achse liegenden Fläche des Stirnzahnkranzes ohne den Bund 15-2 nur im zweiten Teilbereich B3.2 mittels des Lasereinschweißens über den gesamten Umfang oder nur abschnittsweise zu verfestigen.

Figur 2C zeigt das Linienmuster einer vierten Verfestigungsstruktur V34 in dem ersten Teilbereich B3.1 des dritten Bereiches B3, die alternativ zu dem Linienmuster der zuvor beschriebenen gekreuzten ersten Verfestigungsstruktur V31 im Abschnitt des Bundes 15-2 ausgeführt werden kann. Die vierte Verfestigungsstruktur V34 wird kreisförmig auf der Innenfläche des Bundes 15-2, in einer Ausführungsform innen nahe des Übergangsbereiches zwischen dem Bund 15-2 und der Fläche des Stirnzahnkranzes 15 vorgenommen. Dabei kann eine einzige Linie als Laserschweißspur sichtbar oder - wie dargestellt - können mehrere kreisförmige Linien als Laserschweißspuren sichtbar eingeschweißt werden. Durch diese kreisförmige Verfestigungsstruktur V34 wird ein vergleichbarer, wie zuvor bereits beschriebener Effekt der Verfestigung des Bundes 15-2, insbesondere im Übergangsbereich des Bundes 15-2 zu dem Stirnzahnkranz 15 erzielt, wodurch höhere Torsionskräfte aufgenommen werden können.

Die Figuren 2D und 2E verdeutlichen anhand der Linienmuster einer fünften Verfestigungsstruktur V35 und einer sechsten im ersten Teilbereich B3.1 des dritten Bereiches B3 gelegenen Verfestigungsstruktur V36, dass kreisförmige oder gekreuzte Verfestigungsstrukturen V35, V36 auch auf der Außenfläche des Bundes 15-2, insbesondere nahe dem Übergangsbereich des Bundes 15-2 zu dem Stirnzahnkranz 15, ausgeführt werden können. Wie die Figur 2E verdeutlicht, können die Linienmuster der Verfestigungsstrukturen V generell, wie dargestellt, nur abschnittsweise angeordnet werden oder - wie in Figur 2D dargestellt - über den gesamten Umfang des Bundes 15-2 beziehungsweise des Stirnzahnkranzes 15 ausgeführt werden.

Die Figur 3 zeigt in Ergänzung zu dem zweiten Beschlagteil 16B beispielhaft das erste Beschlagteil 16A, welches direkt oder über eine erste Adapterplatte 18A mit der Rückenlehnenstruktur 14 in Verbindung steht.

Das erste Beschlagteil 16A weist ebenfalls einen Zahnkranz in der Art eines Hohlzahnkranzes 21 auf, der mit einer Innenverzahnung 20 versehen ist. Die Innenverzahnung 20 des Hohlzahnkranzes 21 greift in die Außenverzahnung 15-1 des Stirnzahnkranzes 15 ein, so dass die beiden Beschlagteile 16A, 16B den neigungsverstellbaren Lehnenversteller 16 bilden.

Das erste Beschlagteil 16A weist einen Kragenzug 19 auf, der nach dem Zusammenbau der Beschlagteile 16A, 16B im Bund 15-2 des zweiten Beschlagteiles 16B steckt. Im Kragenzug 19 wirken in einem Crashfall hohe Biege- und Druckkräfte, die insbesondere auch in der Verbindung des Kragenzuges 19 mit dem Hohlzahnkranz 21 eingeleitet werden und dort aufgenommen werden müssen. Insofern kann grundsätzlich, was den Kragenzug 19 betrifft, genauso vorgegangen werden, wie im Zusammenhang mit dem Bund 15-2 bereits beschrieben worden ist.

Die dort beschriebenen Linienmuster der Verfestigungsstrukturen V31, V32, V33, V34, V35 und V36 können analog am Kragenzug 19 in einem analog zum zweiten Beschlagteil 16B ausgebildeten ersten Teilbereich B3.1 und/oder in der Fläche, die rechtwinklig zur Y-Achse liegt, des ersten Beschlagteiles 16A in dem zum zweiten Beschlagteil 16B analog ausgebildeten zweiten Teilbereich B3.2 des dritten Bereiches B3 ausgeführt werden. Stellvertretend für die möglichen Linienmuster der Verfestigungsstrukturen V ist ein Linienmuster einer vierten Verfestigungsstruktur V34 am Kragenzug 19 in dem ersten Teilbereich B3.1 dargestellt.

Zusätzlich wird ein Linienmuster einer siebten Verfestigungsstruktur V37 in dem zweiten Teilbereich B3.2 des dritten Bereiches B3 gezeigt, die sternförmig ausgehend von dem Übergangsbereich des Kragenzuges 19 zum Hohlzahnkranz 21 ausgebildet ist. Auf der Fläche des Hohlzahnkranzes 21 werden linienförmige, strahlenartige ein Linienmuster bildende Laserschweißspuren abschnittsweise oder über den gesamten Umfang des Hohlzahnkranzes 21 ausgeführt, wodurch es abschnittsweise oder über den gesamten Umfang zu einer Verfestigung des Materials des ersten Beschlagteiles 16A kommt. Der dadurch erzielte Effekt wurde bereits mehrfach beschrieben.

### Vierter Bereich B4:

### Laserstrahlverfestigung einer ersten Adapterplatte eines Lehneneinstellbeschlages

Figur 1A zeigt ferner einen mehrere flächige Teilbereiche umfassenden vierten Bereich B4 der ersten Adapterplatte 18A, in dessen Teilbereichen B4.1, B4.2 mittels einer Laserlichtquelle zumindest abschnittsweise eine Laserverfestigung vorgenommen wird.

Dieser vierte Bereich B4 umfasst die Fläche innerhalb der ersten Adapterplatte 18A des mindestens einen Lehnenverstellers 16.

Mittels der Laserlichtquelle wird das Linienmuster einer ersten Verfestigungsstruktur V41 des vierten Bereiches B4 in einem ersten Teilbereich B4.1 im Randbereich der ersten Adapterplatte 18A vorgesehen.

Die linienförmigen Laserschweißspuren des Linienmusters verlaufen in der ersten Verfestigungsstruktur V41 des vierten Bereiches B4 im ersten Teilbereich B4.1 in einer gekreuzten Struktur oder in einer Zickzack-Struktur im Wesentlichen parallel zum Randbereich der ersten Adapterplatte 18A. Wie zuvor bereits beschrieben, ist die erste Adapterplatte 18A üblicherweise in einer möglichen Ausgestaltung an ihrem Rand mit der Seitenteilstruktur 14A der Rückenlehnenstruktur 14 verschweißt. Die zugehörige Schweißnaht ist in Figur 1A nicht näher dargestellt. Durch die erste Verfestigungsstruktur V41 wird jetzt der nahe liegende Bereich neben der nach dem Stand der Technik bekannten Schweißnaht laserverfestigt. Dadurch wird in vorteilhafter Weise erreicht, dass der an der Schweißnaht angrenzende Bereich und somit der Verbindungsbereich der ersten Adapterplatte 18A zur Seitenteilstruktur 14A und somit die Verbindung des Lehnenverstellers 16 mit der Seitenteilstruktur stärker verfestigt gehärtet wird, wodurch mittels der Verfestigungsstrukturen V41 im Verbindungsbereich höhere Kräfte übertragen werden können.

Zusätzlich oder alternativ wird mittels der Laserlichtquellen ein Linienmuster als zweite Verfestigungsstruktur V42 im zweiten Teilbereich B4.2 des vierten Bereiches B4 der ersten Adapterplatte 18A ausgeführt. Diese zweite Verfestigungsstruktur V42 liegt im Wesentlichen links und rechts einer in Höhenrichtung, das heißt in Längsrichtung L der Rückenlehnenstruktur 14 verlaufenden Mittelachse der ersten Adapterplatte 18A.

Die Laserschweißspuren des Linienmusters der zweiten Verfestigungsstruktur V42 sind horizontal, orthogonal zur Längsrichtung L angeordnet oder werden - wie dargestellt - so angeordnet, dass sie schräg nach oben in Höhenrichtung verlaufen und ausgehend von der einen sich in Längsrichtung L erstreckenden Hauptgrat bildenden Mittelachse der Rückenlehnenstruktur eine Art Fischgräten-Struktur bilden. Die zweite Verfestigungsstruktur V42 im zweiten Teilbereich B4.2 des vierten Bereiches B4 ähnelt hinsichtlich der Anordnung der Laserschweißspuren der ersten Verfestigungsstruktur V11 im ersten Teilbereich B1.1 des ersten Bereiches B1 innerhalb der Seitenteilstruktur 14A der Rückenlehnenstruktur 14.

### Fünfter Bereich B5:

### Laserstrahlverfestigung einer zweiten Adapterplatte eines Lehneneinstellbeschlages

Figur 1A und Figur 2A zeigen weiter einen mehrere Teilbereiche B5.1, B5.2 umfassenden fünften Bereich B5, der mittels einer Laserlichtquelle zumindest abschnittsweise laserverfestigt wird.

Dieser fünfte Bereich B5 umfasst eine Fläche innerhalb der zweiten Adapterplatte 18B. Die Fläche liegt oberhalb der in Figur 2A dargestellten Abgänge 18B-1 und 18B-2 und unterhalb des in Figur 2A dargestellten Bundes 15-2 mindestens des Lehnenverstellers 16.

Figur 2A zeigt das zweite Beschlagteil 16B, welches über die zweite Adapterplatte 18B mit einem in Figur 2A nicht dargestellten Sitzteil verbunden ist. In Figur 2A ist in einer vergrößerten Darstellung eine erste Verfestigungsstruktur V51 im ersten Teilbereich B5.1 des fünften Bereiches B5 dargestellt.

Das Linienmuster der ersten Verfestigungsstruktur V51 weist in Figur 1A zwei und in Figur 2A drei Laserschweißspuren auf, wodurch die alternative Auswahl der Anzahl und Anordnung von ein Linienmuster bildenden Laserschweißspuren einer Verfestigungsstruktur V deutlich wird.

Die zweite Adapterplatte 18B ist mit dem zweiten Beschlagteil 16B über eine nicht näher dargestellte Schweißnaht verbunden. Das zweite Beschlagteil 16B weist den Bund 15-2 auf, welcher ausgehend von dem Stirnzahnrad 15 mit seiner Außenverzahnung 15-1 des zweiten Beschlagteiles 16B in axialer Richtung Y-Y auskragt. Die Achse Y-Y entspricht der Schwenkachse zur Neigungsverstellung der Rückenlehnenstruktur 14 gegenüber der Sitzteilstruktur 12.

Im Crashfall wirken im Bund 15-2 hohe Torsionskräfte, so dass auch hier die Aufgabe darin besteht, in diesem Bereich zumindest abschnittweise eine erhöhte Festigkeit zu schaffen, um ohne Verformung höhere Kräfte aufnehmen zu können. Dies eröffnet einerseits die Möglichkeit, dass unter der Annahme gleich bleibender Kräfte die Wandstärke eines unverändert eingesetzten Materialtyps reduziert werden kann, woraus eine Gewichtsersparnis der Bauteile resultiert.

Andererseits besteht unter der Annahme gleich bleibender Kräfte auch die Möglichkeit, bei gleich bleibender Wandstärke ein anderes leichteres Material mit einem geringeren spezifischen Gewicht einsetzen zu können, welches durch die Laserverfestigung den geforderten Kräften stand hält, so dass die Bauteile im Ergebnis auch auf diesem Weg ein geringeres Gewicht aufweisen. Die Verfestigung des Bundes 15-2 des zweiten Beschlagteiles 16B ist bereits im Zusammenhang mit dem dritten Bereich B3 (Figur 2B bis 2E) detailliert erläutert worden.

Mittels der Laserlichtquellen wird in der zweiten Adapterplatte 18B ein Linienmuster in der Art einer ersten Verfestigungsstruktur V51 in einem ersten Teilbereich B5.1 des fünften Bereiches B5 oberhalb der Abgänge 18B-1 und 18B-2 vorgesehen.

Eine Laserschweißspur im ersten Teilbereich B5.1 verläuft schräg am hinteren Rand der zweiten Adapterplatte 18B in einem, wie Crashversuche gezeigt haben, im Crashfall stark belasteten Bereich der zweiten Adapterplatte 18B. Die linienförmige Laserschweißspur am hinteren Rand der zweiten Adapterplatte 18B verläuft zwischen dem Lehnenversteller 16 und dem nach hinten verlaufenden Abgang 18B-2 der zweiten Adapterplatte 18B, der das Material schwächend eine Bohrung aufweist, über die die zweite Adapterplatte 18B in einer möglichen Ausgestaltung mit der Sitzteilstruktur 12 verschraubt wird. Diese durch den hinteren Abgang 18B-2 und die hintere Schrauböffnung in Bezug auf einen relativ hohen Krafteintrag geschwächte Struktur im hinteren Bereich des ersten Teilbereiches B5.1 der zweiten Adapterplatte 18B wird durch die erste Verfestigungsstruktur V51 verstärkt.

Das Linienmuster der ersten Verfestigungsstruktur V51 weist im ersten Teilbereich B5.1 in bevorzugter Ausgestaltung eine weitere linienförmige Laserschweißspur auf, die ausgehend von dem hinteren Abgang 18B-2 durch den zentralen unteren Bereich der zweiten Adapterplatte 18B verläuft. Durch eine solche Laserschweißspur wird der gesamte untere Abschnitt der zweiten Adapterplatte 18B außerhalb des eigentlichen Lehnenverstellers 16 im Crashfall gegen Abknicken geschützt, da der erste Teilbereich B5.1 des Bereiches B5 durch das Lasereinschweißen der Laserschweißspur in einem kräftemäßig stark beanspruchten Bereich eine erhöhte Festigkeit aufweist.

Alternativ kann im ersten Teilbereich B5.1 des fünften Bereiches B5 eine weitere Laserschweißspur eingeschweißt werden, die von der vorderen Schrauböffnung des vorderen Abganges 18B-1 schräg nach oben im Wesentlichen in Richtung des Lehnenverstellers 15 durch den zentralen unteren und oberen Bereich des ersten Teilbereiches B5.1 verläuft und die zuvor beschriebene, vom hinteren Abgang 18B-2 kommende linienförmige Laserschweißspur kreuzt. Durch diese erste Verfestigungsstruktur V51 mit dem dargestellten Linienmuster im ersten Teilbereich B5.1 der zweiten Adapterplatte 18B wird die strukturelle Festigkeit wirksam erhöht und die zweite Adapterplatte 18b wird so gegen ungewolltes Verformen, insbesondere Abknicken, verstärkt.

Außerdem wird in einem zweiten Teilbereich B5.2 des fünften Bereiches B5 ein Linienmuster vorgeschlagen, das ebenfalls linienförmig ausgeführt wird und eine Kreisform aufweist.

Eine zweite Verfestigungsstruktur V52 in einem zweiten Teilbereich B5.2 des fünften Bereiches B5 verläuft kreisförmig im Bereich der Verbindungsstelle zwischen dem Bund 15-2 und der zweiten Adapterplatte 18B. Die Laserschweißspur der zweiten Verfestigungsstruktur V52 verläuft, wie in Figur 1A und 2A dargestellt, nahe des Verbindungsbereiches oder wird mit einem größerem als dem dargestellten Durchmesser auf der Fläche der zweiten Adapterplatte 18B kreisförmig ausgeführt. Hierdurch wird in vorteilhafter Weise eine Verfestigung der Struktur im Verbindungsbereich zwischen dem Bund 15-2 und der zweiten Adapterplatte 18B erreicht.

### Sechster Bereich B1:

### Laserstrahlverfestigung einer Seitenteilstruktur einer Sitzteilstruktur

Gemäß Figur 1A wird ferner vorgeschlagen, dass die Struktur eines Fahrzeugsitzes ebenfalls in einem sechsten Bereich B6 mittels einer Laserlichtquelle verfestigt wird.

Der sechste Bereich B6 umfasst die Fläche der Seitenteilstruktur 12A der Sitzteilstruktur 12.

Gemäß Figur 1A und 2A ist die zweite Adapterplatte 18B mit der Seitenteilstruktur 12A der Sitzteilstruktur 12 mittels Schraubverbindungen über die dafür in der zweiten Adapterplatte 18B in den Abgängen 18B-1, 18B-2 (Figur 1A) vorgesehenen Öffnungen 18B-11, 18B-21 (Figur 2A) verbunden. Die zugehörigen Öffnungen 12A-11, 12A-21 in der Seitenteilstruktur 12A der Sitzteilstruktur 12 sind in den Figuren 1H bis 1J dargestellt.

Figur 1A und jeweils die Figuren 1H bis 1J zeigen einen ersten Teilbereich 6.1 des sechsten Bereiches B6, der unterhalb der Abgänge 18B-1, 18B-2 der zweiten Adapterplatte 18B in der Seitenteilstruktur 12A der Sitzteilstruktur 12 vorgesehen ist. Der erste Teilbereich B6.1 des sechsten Bereiches B6 befindet sich somit in dem an die zweite Adapterplatte 18B angrenzenden Bereich der Seitenteilstruktur 12A der Sitzteilstruktur 12.

Der erste zwischen den Abgängen 18B-1, 18B-2 liegende Teilbereich B6.1 des sechsten Bereiches B6 unterliegt im Crashfall einer besonders hohen Belastung. Diese hohe Belastung kann durch das in Figur 1A gezeigte v-förmig zulaufende linienförmige Linienmuster der ersten Verfestigungsstruktur V61 im ersten Teilbereich B6.1 des sechsten Bereiches B6 besser in der Seitenteilstruktur 12A aufgenommen werden. Die laserstrahlverfestigte Seitenteilstruktur 12A behält gegenüber nicht laserstrahlverfestigten Seitenteilstrukturen 12A ihre Form, wobei Crashkräfte auftreten können, die bei nicht laserstrahlverfestigten Seitenteilstrukturen 12A zu einem Knicken oder Falten der Seitenteilstruktur 12A im ersten Teilbereich B6.1 führen.

Nachfolgend werden weitere mittels einer Laserquelle zur Verfestigung vorgesehene Teilbereiche B6.2 und B6.3 des sechsten Bereiches B6 der Seitenteilstruktur 12A der Sitzteilstruktur 12 anhand der Figuren 1H, 1I, 1J erläutert.

Die Figuren 1H, 1I, 1J zeigen, ausgehend von der üblichen Anordnung eines Fahrzeugsitzes in einem Fahrzeug, übereinstimmend eine im Zusammenbauzustand definierte Oberseite - O - und eine Unterseite - U - der Seitenteilstruktur 12A. Die Figuren zeigen analog zu dem Rückenlehnenseitenholm 14A jeweils eine im üblichen Einbauzustand des Fahrzeugsitzes in x-Richtung verlaufende Längsrichtung L der Seitenteilstruktur 12A der Sitzteilstruktur 12. Die Seitenteilstruktur 12A weist ebenfalls eine in die Blattebene hinein vertieft ausgeführte Sicke 12A-1 auf. Die Figuren 1H, 1I, 1J zeigen ferner übereinstimmend die im Zusammenbauzustand der Sitzstruktur außen liegende Fläche, mithin eine Außenseite - A - der Seitenteilstruktur 12A.

Crash-Untersuchungen haben hier ergeben, dass gerade die Oberseite - O - und die Unterseite - U - gegen Einknicken gesichert, das heißt entsprechend stabil ausgelegt werden muss.

Deshalb wird gemäß Figur 1H in der Seitenteilstruktur 12A beispielsweise neben der bereits beschriebenen ersten Verfestigungsstruktur V61 eine zweite Verfestigungsstruktur V62 ausgeführt, die jeweils im Randbereich, der als zweiter Teilbereich B6.2 des sechsten Bereiches B6 definiert wird, angeordnet ist. Die auf der Außenseite - A -sichtbaren Linienmuster verlaufen im Wesentlichen oben und unten parallel zu der Längsrichtung L der Seitenteilstruktur 12A der Sitzteilstruktur 12.

Ein weiteres Linienmuster in der Art einer dritten Verfestigungsstruktur V63 kann gemäß Figur 1I alternativ ausgeführt werden. Sie ist ebenfalls jeweils im Randbereich der Seitenteilstruktur 12A im zweiten Teilbereich B6.2 des sechsten Bereiches B6 angeordnet. Die auf der Außenseite - A -sichtbaren Laserschweißspuren verlaufen bei der dritten Verfestigungsstruktur V63 im Wesentlichen oben und unten zu der Längsrichtung L der Seitenteilstruktur 12A der Sitzteilstruktur 12, jedoch sind die Laserschweißspuren parallel zueinander und orthogonal zur Längsrichtung L angeordnet.

Schließlich wird gemäß Figur 1J eine weitere alternative Ausführung vorgeschlagen, bei der das Linienmuster die Laserschweißspuren einer vierten Verfestigungsstruktur V64 im vierten Bereich B4 die beiden in Längsrichtung L verlaufenden Ränder der in der Seitenteilstruktur 12A der Sitzteilstruktur 12 angeordneten Sicke 12A-1 kreuzen. Die bereits zur Erhöhung der Stabilität der Seitenteilstruktur 12A angeordnete Sicke 12A-1 wird durch die in die Vertiefung der Sicke 12A-1 hinein laufenden Laserschweißspuren zumindest abschnittsweise weiter verfestigt. Die Verfestigung trägt zur weiteren Erhöhung der Stabilität der Seitenteilstruktur 12A bei.

Die dargestellten Linienmuster der Laserschweißspuren der vierten Verfestigungsstruktur V64 sorgen für eine Verfestigung der Randbereiche im zweiten Teilbereich B6.2 und in einem zentralen Flächenbereich der Seitenteilstruktur 12A, der als dritter Teilbereich B6.3 definiert wird. Es versteht sich, dass die vierte Verfestigungsstruktur V64 in der Seitenteilstruktur 12A auch ohne vorgesehene Sicke 12A-1 ausführbar ist, wodurch die Stabilität der Seitenteilstruktur 12A unabhängig von der Sicke 12A-1 erhöht werden kann. Eine Kombination von Sicke 12A-1 und eine Laserverfestigung mittels mindestens einer Verfestigungsstruktur V61, V62, V63, V64 wurde analog zu dem Rückenlehnenseitenholm 14A hinsichtlich der Stabilisierung der Seitenteilstruktur 12A der Sitzteilstruktur 12 als besonders wirksam befunden.

Abschließend wird noch einmal erwähnt, dass alle beschriebenen Linienmuster der Verfestigungsstrukturen V einzeln oder in Kombination ausgeführt werden können.

### Bezugszeichenliste

- 10: Fahrzeugsitzstruktur
- 12: Sitzteilstruktur
- 12A: Seitenteilstruktur der Sitzteilstruktur 12
- 12A-1: Sicke
- 14: Rückenlehnenstruktur
- 14A: Seitenteilstruktur der Rückenlehnenstruktur 14
- 14A-1: Sicke
- 14B: Rückwandstruktur der Rückenlehnenstruktur 14
- 15: Stirnzahnkranz
- 15-1: Außenverzahnung
- 15-2: Bund
- 16: Lehnenversteller
- 16A: erstes Beschlagteil
- 16B: zweites Beschlagteil
- 18: Adapterplatten
- 18A: erste Adapterplatte
- 18B: zweite Adapterplatte
- 18B-1: vorderer Abgang
- 18B-2: hinterer Abgang
- 19: Kragenzug
- 20: Innenverzahnung
- 21: Hohlzahnkranz

- Bn: n-ter Bereich
- Bn.m: m-ter Teilbereich des n-ten Bereiches
- Vn: Verfestigungsstruktur im n-ten Bereich

- B1: erster Bereich
- B1.1: erster Teilbereich des ersten Bereiches
- B1.2: zweiter Teilbereich des ersten Bereiches
- V11: erste Verfestigungsstruktur im ersten Teilbereich B1.1
- V12: zweite Verfestigungsstruktur im zweiten Teilbereich B1.2
- V13: dritte Verfestigungsstruktur im zweiten Teilbereich B1.2
- V14: vierte Verfestigungsstruktur im zweiten Teilbereich B1.2
- V15: fünfte Verfestigungsstruktur im zweiten Teilbereich B1.2
- V16: sechste Verfestigungsstruktur im zweiten Teilbereich B1.2
- V17: siebte Verfestigungsstruktur im zweiten Teilbereich B1.2

- B2: zweiter Bereich
- V21: zweite Verfestigungsstruktur im zweiten Bereich

- B3: dritter Bereich
- B3.1: erster Teilbereich des dritten Bereiches
- B3.2: zweiter Teilbereich des dritten Bereiches
- V31: erste Verfestigungsstruktur im dritten Bereich
- V32: zweite Verfestigungsstruktur im dritten Bereich
- V33: dritte Verfestigungsstruktur im dritten Bereich
- V34: vierte Verfestigungsstruktur im dritten Bereich
- V35: fünfte Verfestigungsstruktur im dritten Bereich
- V36: sechste Verfestigungsstruktur im dritten Bereich
- V37: siebte Verfestigungsstruktur im dritten Bereich

- B4: vierter Bereich
- B4.1: erster Teilbereich des vierten Bereiches
- B4.2: zweiter Teilbereich des vierten Bereiches
- V41: erste Verfestigungsstruktur im vierten Bereich
- V42: zweite Verfestigungsstruktur im vierten Bereich

- B5: fünfter Bereich
- B5.1: erster Teilbereich des fünften Bereiches
- B5.2: zweiter Teilbereich des fünften Bereiches
- V51: erste Verfestigungsstruktur im fünften Bereich
- V52: zweite Verfestigungsstruktur im fünften Bereich

- B6: sechster Bereich
- B6.1: erster Teilbereich des sechsten Bereiches
- B6.2: zweiter Teilbereich des sechsten Bereiches
- B6.3: dritter Teilbereich des sechsten Bereiches
- V61: erste Verfestigungsstruktur im sechsten Bereich
- V62: zweite Verfestigungsstruktur im sechsten Bereich
- V63: dritte Verfestigungsstruktur im sechsten Bereich
- V64: vierte Verfestigungsstruktur im sechsten Bereich

- x: in Längsrichtung des Fahrzeuges liegende Richtung
- y: Horizontale des Fahrzeuges quer zur x-Richtung
- z: Vertikale des Fahrzeuges quer zur x-Richtung.

- - L -: Längsrichtung
- - V -: Vorderseite
- - R -: Rückseite
- - A -: Außenseite
- - O -: Oberseite
- - U -: Unterseite

## Patentansprüche

1. Verfahren zur gezielten Beeinflussung des Verformungsverhaltens des Materials einer Rückenlehnenstruktur (14) und einer Sitzteilstruktur (12), die mittels eines Beschlagteile (16; 16A, 16B; 18; 18A, 18B) aufweisenden Lehnenverstellers (16, 18) zu einer Fahrzeugsitzstruktur (10) neigungsverstellbar verbunden sind,
**dadurch gekennzeichnet, dass**
• das Material, an Stellen in denen keine Bauteile miteinander verbunden werden, in mindestens einem flächigen Bereich (Bn; Bn.m) der Fahrzeugsitzstruktur (10) und/oder des Lehnenverstellers (16, 18) mittels einer Laserlichtquelle linienförmig unter Ausbildung eines mindestens eine Linie umfassenden Linienmusters erwärmt wird, und
• a) in einem Teil der vorhandenen Materialstärke des Materials teilweise umgeschmolzen oder b) über die gesamte Materialstärke des Materials vollständig umgeschmolzen wird, und durch Selbstabschreckung abgekühlt und in eine härtere Gefügeform umgewandelt wird,
• wobei mittels der Laserlichtquelle zumindest eine Verfestigungsstruktur (Vn) erzeugt wird, die im Material der jeweiligen Struktur (12, 14) und/oder des Lehnenverstellers (16, 18) in dem von dem Linienmuster durchzogenen flächigen Bereich (Bn; Bn.m) eine linienförmige Fließbehinderung darstellt, in dem eine höhere Energie aufgenommen wird,
• wodurch die Fahrzeugsitzstruktur (10) in dem mindestens einen durch die Verfestigungsstruktur (Vn) laserverfestigten Bereich (Bn; Bn.m) strukturell eine erhöhte Festigkeit aufweist.

2. Verfahren nach Anspruch 1, **dadurch gekennzeichnet, dass** die mindestens eine Verfestigungsstruktur (Vn) als Linienmuster in dem Material des mindestens einen laserverfestigten Bereiches (Bn; Bn.n) mit demjenigen Laserstrahlgerät durchgeführt wird, welches auch zum Verbinden von zusammengefügten Strukturen der Fahrzeugsitzstruktur (10) mittels Laserschweißen verwendet wird.

3. Fahrzeugsitzstruktur (10), umfassend eine Rückenlehnenstruktur (14) und eine Sitzteilstruktur (12), die über mindestens einen ein Beschlagteil (16A, 16B; 18A, 18B) aufweisenden Lehnenversteller (16, 18) neigungsverstellbar miteinander verbunden sind, **gekennzeichnet durch** mindestens einen materialseitig laserstrahlverfestigten Bereich (Bn; Bn.m), in dem mindestens eine, mittels einer Laserlichtquelle erzeugtes mindestens eine Linie umfassendes Linienmuster aufweisende Verfestigungsstruktur (Vn) angeordnet ist, die nach dem Verfahren nach Anspruch 1 erzeugt ist, wobei die mindestens eine Linie eine linienförmige Fließbehinderung im Material darstellt, so dass in der mindestens einen Verfestigungsstruktur (Vn) eine höhere Energie aufgenommen wird, wodurch die Fahrzeugsitzstruktur (10) in dem mindestens einen durch die Verfestigungsstruktur (Vn) laserverfestigten Bereich (Bn; Bn.m) strukturell eine erhöhte Festigkeit aufweist.

4. Fahrzeugsitzstruktur nach Anspruch 3, **dadurch gekennzeichnet, dass** das Material einer Seitenteilstruktur (14A) der Rückenlehnenstruktur (14) in einem ersten Bereich (B1; B1.1, B1.2) mindestens eine mittels einer Laserlichtquelle erzeugte Verfestigungsstruktur (V11, V12, V13, V14, V15, V16, V17) umfasst.

5. Fahrzeugsitzstruktur nach Anspruch 3, **dadurch gekennzeichnet, dass** das Material einer Rückwandstruktur (14B) der Rückenlehnenstruktur (14) in einem zweiten Bereich (B2) des mindestens einen Lehnenverstellers (16) mindestens eine mittels einer Laserlichtquelle erzeugte Verfestigungsstruktur (V21) umfasst.

6. Fahrzeugsitzstruktur nach Anspruch 3, **dadurch gekennzeichnet, dass** das Material in einem dritten Bereich (B3; B3.1, B3.2) mindestens eines Beschlagteiles (16A, 16B) des mindestens einen Lehnenverstellers (16) mindestens eine mittels einer Laserlichtquelle erzeugte Verfestigungsstruktur (V31, V32, V33, V34, V35, V36, V37) umfasst.

7. Fahrzeugsitzstruktur nach Anspruch 3, **dadurch gekennzeichnet, dass** das Material mindestens eines vierten (B4; B4.1, B4.3) und/oder fünften Bereiches (B5; B5.1, B5.2) mindestens einer mit einem der Beschlagteile (16A, 16B) verbundenen Adapterplatte (18A, 18B) des mindestens einen Lehnenverstellers (16) mindestens eine erzeugte Verfestigungsstruktur (V41, V42, V51, V52) umfasst.

8. Fahrzeugsitzstruktur nach Anspruch 3, **dadurch gekennzeichnet, dass** das Material einer Seitenteilstruktur (12A) der Sitzteilstruktur (12) in einem sechsten Bereich (B6; B6.1, B6.2, B6.3) mindestens eine mittels einer Laserlichtquelle erzeugte Verfestigungsstruktur (V61, V62, V63, V64) aufweist.

## Claims

1. Method for the targeted influencing of the deformation behaviour of the material of a backrest structure (14) and a seat part structure (12), which are connected in an inclination-adjustable manner to form a vehicle seat structure (10) by means of a backrest adjuster (16, 18) having fitting parts (16; 16A, 16B; 18; 18A, 18B), **characterized in that**
• the material, at points in which no components are connected to one another, is heated in at least one flat region (Bn; Bn.m) of the vehicle seat structure (10) and/or the backrest adjuster (16, 18) linearly by means of a laser light source forming a line pattern comprising at least one line, and
• a) is partially fused in a part of the existing thickness of the material, or b) is completely fused over the entire thickness of the material, and is cooled by self-quenching and converted into a harder structural shape,
• wherein the laser light source is used to produce at least one strengthening structure (Vn) which, in the material of the respective structure (12, 14) and/or the backrest adjuster (16, 18), in the flat region (Bn; Bn.m) traversed by the line pattern, constitutes a linear flow obstruction where higher energy is absorbed,
• as a result of which the vehicle seat structure (10) has increased strength structurally in the at least one region (Bn; Bn.m) laser-strength and by the strengthening structure (Vn).

2. Method according to Claim 1, **characterized in that** the at least one strengthening structure (Vn) in the form of a line pattern in the material of the at least one laser-strengthened region (Bn; Bn.m) is carried out with the same laser beam apparatus which is also used for connecting joined-together structures of the vehicle seat structure (10) by means of laser welding.

3. Vehicle seat structure (10), comprising a backrest structure (14) and a seat part structure (12), which are connected to each other in an inclination-adjustable manner by at least one backrest adjuster (16, 18) having a fitting part (16A, 16B; 18A, 18B), **characterized by** at least one region (Bn; Bn.m), the material of which is strengthened by laser beam and in which at least one strengthening structure (Vn) produced according to the method according to Claim 1 is arranged, said strengthening structure being produced by means of a laser light source and having a line pattern comprising at least one line, wherein the at least one line constitutes a linear flow obstruction in the material, and therefore higher energy is absorbed in the at least one strengthening structure (Vn), as a result of which the vehicle seat structure (10) has increased strength structurally in the at least one region (Bn; Bn.m) which is laser-strengthened by the strengthening structure (Vn).

4. Vehicle seat structure according to Claim 3, **characterized in that** the material of a side part structure (14A) of the backrest structure (14) comprises at least one strengthening structure (V11, V12, V13, V14, V15, V16, V17), which is produced by means of a laser light source, in a first region (B1; B1.1, B1.2).

5. Vehicle seat structure according to Claim 3, **characterized in that** the material of a back wall structure (14B) of the backrest structure (14) comprises at least one strengthening structure (V21), which is produced by means of a laser light source, in a second region (B2) of the at least one backrest adjuster (16).

6. Vehicle seat structure according to Claim 3, **characterized in that** the material in a third region (B3; B3.1, B3.2) of at least one fitting part (16A, 16B) of the at least one backrest adjuster (16) comprises at least one strengthening structure (V31, V32, V33, V34, V35, V36, V37) produced by means of a laser light source.

7. Vehicle seat structure according to Claim 3, **characterized in that** the material at least of a fourth region (B4; B4.1, B4.3) and/or fifth region (B5; B5.1, B5.2) of at least one adapter plate (18A, 18B), which is connected to one of the fitting parts (16A, 16B), of the at least one backrest adjuster (16) comprises at least one produced strengthening structure (V41, V42, V51, V52).

8. Vehicle seat structure according to Claim 3, **characterized in that** the material of a side part structure (12A) of the seat part structure (12) has at least one strengthening structure (V61, V62, V63, V64), which is produced by means of a laser light source, in a sixth region (B6; B6.1, B6.2, B6.3).

## Revendications

1. Procédé pour agir de manière contrôlée sur le comportement de déformation du matériau d'une structure de dossier (14) et d'une structure partielle de siège (12) reliées de manière ajustable en inclinaison au moyen d'un réglage de dos (16, 18) présentant des pièces de ferrure (16; 16A, 16B; 18, 18A, 18B), pour former une structure (10) de siège de véhicule, **caractérisé en ce que**
aux emplacements auxquels aucun composant n'est relié à d'autres, dans au moins une partie de surface (Bn; Bn.m) de la structure (10) de siège de véhicule et/ou du réglage de dos (16, 18), le matériau est chauffé suivant une ligne en formant un motif linéaire qui comprend au moins une ligne et
a) cette ligne est fondue partiellement dans une partie de l'épaisseur du matériau ou b) est fondue complètement sur toute l'épaisseur du matériau, est refroidie par auto-retrait et est convertie en un réseau de forme plus dure,
au moins une structure de solidification (Vn) qui représente dans le matériau de la structure (12, 14) concernée et/ou du réglage de dos (16, 18), dans la partie de surface (Bn; Bn.m) traversée par le motif en ligne un obstacle de forme linéaire à l'écoulement dans lequel une énergie plus élevée est reprise est formée au moyen de la source de lumière laser,
grâce à quoi la structure (10) de siège de véhicule présente structurellement une solidité accrue dans la ou les parties (Bn; Bn.m) solidifiées au laser par la structure de solidification (Vn).

2. Procédé selon la revendication 1, **caractérisé en ce que** la ou les structures de solidification (Vn) sont réalisées sous la forme d'un motif linéaire dans le matériau de la ou des parties (Bn; Bn.n) solidifiées par laser par l'appareil à faisceau laser qui a également été utilisé pour relier par soudage au laser les structures assemblées de la structure (10) de siège de véhicule.

3. Structure (10) de siège de véhicule comprenant une structure de dossier (14) et une structure partielle de siège (12) reliées de manière ajustable en inclinaison au moyen d'un réglage de dos (16, 18) présentant au moins une pièce de ferrure (16; 16A, 16B; 18, 18A, 18B),
**caractérisée par**
au moins une partie (Bn; Bn.m) dont le matériau a été solidifié par un faisceau laser et dans laquelle au moins une structure de solidification (Vn) présentant un motif en ligne formé par une source de lumière laser et comprenant au moins une ligne est formée en recourant au procédé selon la revendication 1,
la ou les lignes représentant un obstacle linéaire à l'écoulement dans le matériau de telle sorte qu'une énergie plus importante soit reprise dans la ou les structures de solidification (Vn), grâce à quoi la structure (10) de siège de véhicule présente structurellement une solidité accrue dans la ou les parties (Bn; Bn.m) solidifiées au laser par la structure de solidification (Vn).

4. Structure de siège de véhicule selon la revendication 3, **caractérisée en ce que** le matériau d'une structure (14A) de partie latérale de la structure de dossier (14) comporte dans au moins une partie (B1; B1.1, B1.2) au moins une structure de solidification (V11, V12, V13, V14, V15, V16, V17) formée par une source de lumière laser.

5. Structure de siège de véhicule selon la revendication 3, **caractérisée en ce que** le matériau d'une structure (14B) de paroi arrière de la structure de dossier (14) comporte dans une deuxième partie (B2) du ou des réglages de dos (16) au moins une structure de solidification (V21) formée au moyen d'une source de lumière laser.

6. Structure de siège de véhicule selon la revendication 3, **caractérisée en ce que** dans une troisième partie (B3; B3.1, B3.2) d'au moins une partie de ferrure (16A, 16B) du ou des réglages de dos (16), le matériau comporte au moins une structure de solidification (V31, V32, V33, V34, V35, V36, V37) formée au moyen d'une source de lumière laser.

7. Structure de siège de véhicule selon la revendication 3, **caractérisée en ce que** le matériau d'une ou de plusieurs quatrièmes parties (B4; B4.1, B4.3) et/ou d'une cinquième partie (B5; B5.1, B5.2) d'au moins une plaque d'adaptation (18A, 18B) du ou des réglages de dos (16) comporte au moins une structure de solidification (V41, V42, V51, V52) ainsi formé.

8. Structure de siège de véhicule selon la revendication 3, **caractérisée en ce que** le matériau d'une structure (12A) d'une partie latérale de la structure (12) de siège présente dans une sixième partie (B6; B6.1, B6.2, B6.3) au moins une structure de solidification (V61, V62, V63, V64) formée au moyen d'une source de lumière laser.
